# EUROPEAN PATENT SPECIFICATION

(11) **EP 2 477 830 B1**
(45) Date of publication and mention of the grant of the patent: **31.07.2013**
(21) Application number: 10776188.4
(22) Date of filing: 14.09.2010
(51) Int. Cl.: B60K 1/00

(54) **MANUAL DEVICE FOR CONTROLLING BRAKE AND ACCELERATOR OF A VEHICLE**
MANUELLE VORRICHTUNG ZUR BREMS- UND BESCHLEUNIGUNGSSTEUERUNG BEI EINEM FAHRZEUG
DISPOSITIF MANUEL POUR COMMANDER LE FREIN ET L'ACCÉLÉRATEUR D'UN VÉHICULE

(30) Priority: 16.09.2009 IT RM20090471
(43) Date of publication of application: 25.07.2012
(73) Proprietor: Guidosimplex S.r.l., 00166 Roma (IT)
(72) Inventor: VENTURINI, Fabrizio, I-00166 Roma (IT)
(74) Representative: Iannone, Carlo Luigi
(86) International application number: PCT/IT2010/000391
(87) International publication number: WO 2011/033547

(56) References cited:
- WO-A2-2006/051532
- DE-A1- 10 140 187
- DE-A1-102004 050 067
- DE-A1-102005 046 318

## Description

The present invention concerns a manual device for controlling brake and accelerator of a vehicle.

More specifically, the invention relates to a manual device of the above kind comprised of three lever pivoted in different points of a frame and interacting so as to adjust braking and acceleration of a vehicle by movement of a single knob.

As it is well known, in the field concerning devices for helping driving vehicles for disabled persons, different devices exist for manually controlling acceleration and braking action. They are comprised of a plurality of levers, connected with pedal operation levers, occupying space within the passenger compartment. In order to reduce dimensions of the device, levers are usually provided in a lowered position, and thus levers and connection rods when moving rubbing against driver legs or car elements, such as the seat of the central passage. Further, said rods, if the driver acts on pedals by lower limbs, transmit the movement to the manual control levers; in order to obviate to said drawback, said rods must be telescopic rods, thus being more difficult to be realised and reducing strength of the whole device.

Thus, the needing exists of realising a manual control device which is small, and permits, by a single element, actuating two controls, and can be installed so as not to hinder driver movements, or rubbing against cart parts, and, finally, permits using rigid rods ensuring a best solidity of the structure.

Object of the present invention is therefore that of realising a manual control device having small dimensions, permitting by a single element actuating two controls, can be installed so as not to hinder driver movements, or rubbing against cart parts, and, finally, permits using rigid rods ensuring a best solidity of the structure.

Main innovative feature is that accelerator and brake levers are placed within a housing permitting ensuring operation preventing, in case of leg contraction, (not wished) interference with driver when controlling brake and accelerator lever. At the same time, housing acts both as anchoring and as lever, and all other accessories, support, thus creating set self-supporting and limited dimensions within the vehicle. W02006/051532 describes a device according to the pre-characterizing portion of independent claim 1 of the present application.
It is therefore specific object of the present invention a manual device for controlling brake and accelerator of a vehicle, said device comprising a body, coupled with the vehicle and remaining substantially fixed while the device is used, and within which there are provided first lever, projecting from inside said body, and movable independently with respect to the same, a second lever and a third lever, and a frame, said device being characterized in that said first lever is provided with an upper handgrip and is pivoted on the frame in a substantially central position, so that, if user exerts an action on said handgrip, it can be displaced forward or backward, said second lever being pivoted above on said frame, in correspondence of one of its ends, the upper part of the first lever being so shaped not to interfere with said second lever, as an upper kinematic torque, said third lever being pivoted at the bottom of said frame, in correspondence of one of its ends, lower end of said first lever being so shaped to interfere with said lever, as an upper kinematic torque, free end of the second lever being coupled with brake operation means, and free end of the third lever being coupled with accelerator operation means.

Preferably, according to the invention, said second lever and said third lever are provided with return elastic means, particularly a spring, aiming to bring then in a rest or neutral position.

Still according to the invention, said device is provided with a bracket for fixing to the vehicle, particularly a bracket that can be inserted within holes realised into the seat frame.

Furthermore, according to the invention, said frame provides two specular elements, placed aside the lever assembly.

Preferably, according to the invention, acceleration action is made pulling backward said first lever, while braking action is made pushing said first lever forward.

Advantageously, said handgrip can be provided with other controls, such as, for example, a brake blocking button, horn, of light operating controls.

Furthermore, according to the invention, said device can be horizontally provided under the steering wheel.

Present invention will be now described for illustrative, but not limitative purposes, with reference to the figures of the enclosed drawings, according to one preferred embodiment. Particularly:

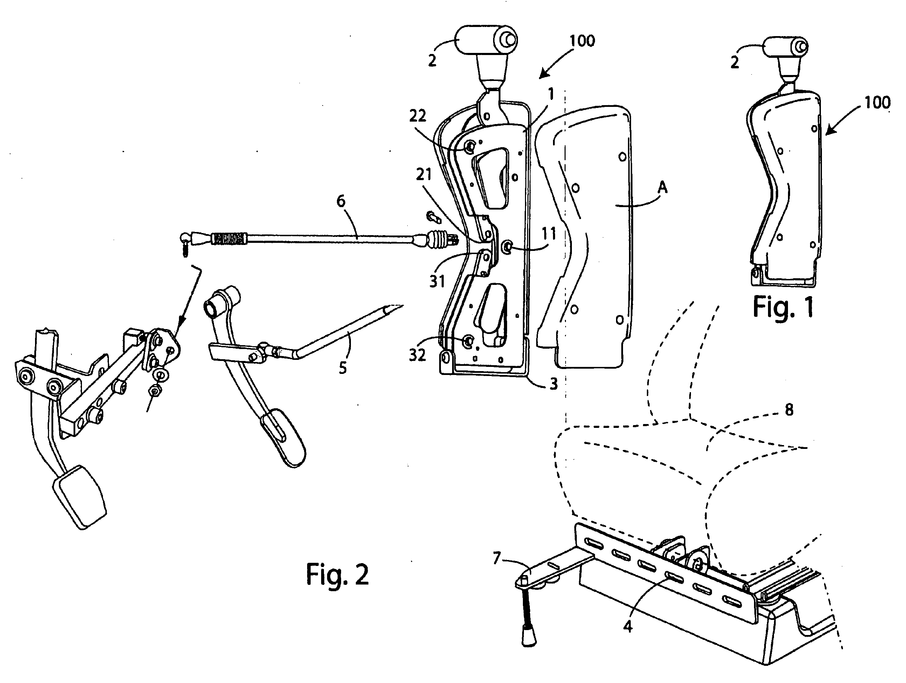

figure 1 is an axonometric view of manual device according to the invention;
figure 2 schematically shows, partially in exploded view, manual device according to the invention and its system for anchoring to the vehicle elements;

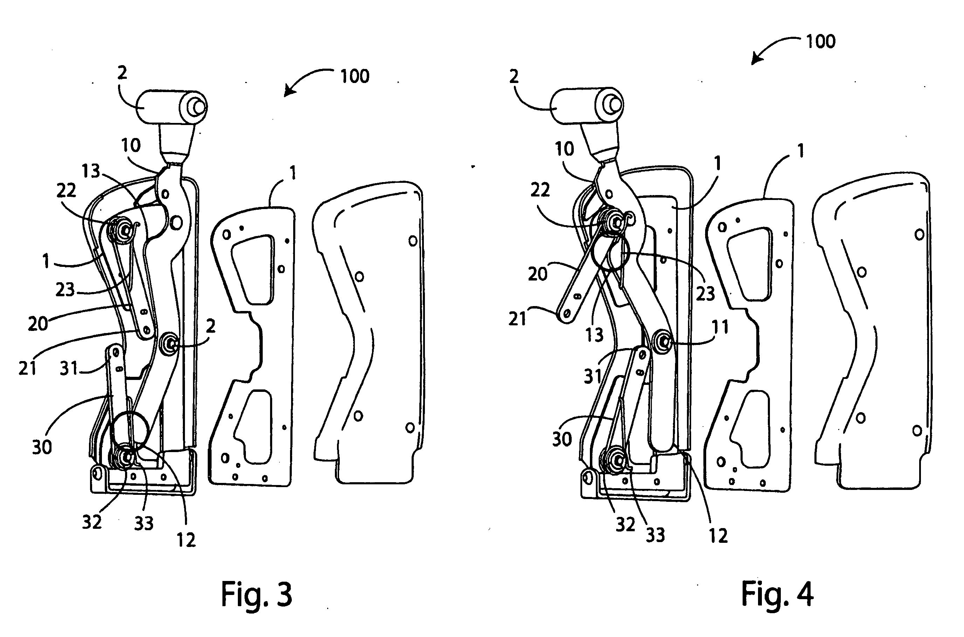

figure 3 schematically shows device according to the invention, from which outer housing has been removed, during operative acceleration step; and
figure 4 schematically shows device according to the invention, from which outer housing has been removed, during operative braking step.

Observing the enclosed drawings, it is observed manual device 100 according to the invention, comprising a body A (comprised of two hemi-shells), within which there are provided a first lever 10, provided with an upper handgrip 2, a second lever 20, and a third lever 30, and a frame 1, that in the embodiment shown provides two specular elements, but that can be realised in a different way.

Said first lever 10 is pivoted according to a substantially central horizontal position 11 on said frame 1, so that, in case user exerts an action on said handgrip 2, can be displaced forward or backward.

Said second lever 20 is pivoted above on said frame 1, in correspondence of one of its ends, at point indicated by reference number 22. Upper part 13 of lever 10 is so shaped so as to interfere with said second lever 20, like an upper kinematic torque.

Said third lever 30 is pivoted at the bottom of said frame 1, in correspondence of one of its ends, at point indicated by reference number 32. Lower end 12 of said first lever 10 is so shaped to interfere with said lever, as an upper kinematic torque.

Free end of second lever 20 is coupled with a rod 6 for operation of brake, while free end of third lever 30 is coupled with a rod 5 for operation of accelerator. Acceleration and braking systems will be no further described, since they are not specific part of the invention.

Device 100 according to the invention is further provided with a bracket 3 for fixing to the vehicle. Particularly, in the solutions shown, fixing occurs on a bracket 7 that can be inserted through holes 4 realised on seat 8 frame, so as to be able to adjust position of device 100 according to the user needing.

Acting on handgrip 2, by a pushing action, backward in the present embodiment, i.e. pulling the lever 10 toward the user, lower end 12 of lever 10 acts on lever 30, making it rotating with an excursion corresponding to the full accelerator stroke. Obviously, user can tune action, deciding when accelerating or not. A return spring 33 is provided on pivoting point 32 of lever 30 aiming bringing lever 30 back in a rest position as soon as pushing action is released from the same lever 10, thus preventing risk that vehicle is involuntarily accelerated.

Acting instead on handgrip 2, pushing it forward, upper end of lever 10 acts on lever 20, making it rotating about point 22, of a distance corresponding to the full brake stroke. Obviously, in this case too the user can adjust the action, deciding when applying the braking action. A return spring 23 is provided on pivoting point 22 of lever 20, aiming to bring the lever 20 back in the rest position as soon as pushing exerted on the same lever 10 is released.

As it can be noted, by device 100 according to the invention, it is provided to the user a system which is very simple and usable by a single hand to accelerate and brake. Acceleration and braking direction can be obviously reversed. Furthermore, device according to the invention is so realised to ensure elimination of every acceleration force while braking, since to brake it is necessary interrupting the acceleration action.

Advantageously, as already said, said handgrip 2 can be provided with different controls, such as, for example, a brake blocking button, horn, or light operating controls.

Preferred embodiments of the invention have been described in the above, but it is to be understood that modifications and variations can be introduced by those skilled in the art without departing from the relevant scope as defined in the enclosed claims.

## Claims

1. Manual device (100) for controlling brake and accelerator of a vehicle, said device (100) comprising a body (A), coupled with the vehicle and remaining substantially standstill while the device is used, and within which there are provided first lever (10), projecting from inside said body (A), and movable independently with respect to the same, a second lever (20) and a third lever (30), and a frame (1), **characterized in that** said first lever is with an upper handgrip (2) and is pivoted on the frame in a substantially central position (11), so that, if user exerts an action on said handgrip (2), it can be displaced forward or backward, said second lever (20) being pivoted above on said frame (1), in correspondence of one of its ends (22), the upper part (13) of the first lever (10) being so shaped so as to interfere with said second lever (20), as an upper kinematic torque, said third lever (30) being pivoted at the bottom of said frame (1), in correspondence of one of its ends (32), lower end (12) of said first lever (10) being so shaped to interfere with said lever, as an upper kinematic torque, free end (21) of the second lever being coupled with brake operation means (6), and free end (31) of the third lever (30) being coupled with accelerator operation means (5).

2. Device according to claim 1, **characterised in that** said second lever and said third lever are provided with return elastic means (23, 33) aiming to bring then in a rest or neutral position.

3. Device according to claim 2, **characterised in that** said elastic means (23, 33) are comprised of a spring.

4. Device according to one of the preceding claims, **characterised in that** it is provided with a bracket (3) for fixing to the vehicle, particularly a bracket (7), that can be inserted within hole (4) realised into the seat frame.

5. Device according to one of the preceding claims, **characterised in that** said frame (1) provides two specular elements, placed aside the lever assembly.

6. Device according to one of the preceding claims, **characterised in that** acceleration action is made pulling backward said first lever, while braking action is made pushing said first lever forward.

7. Device according to one of the preceding claims, **characterised in that** said handgrip is provided with other controls, such as, for example, a brake blocking button, horn, of light operating controls.

8. Device according to one of the preceding claims 1-3 and 5-7, **characterised in that** said device is to be horizontally provided under a steering wheel.

## Patentansprüche

1. Manuelle Vorrichtung (100) zur Brems- und Beschleunigungssteuerung bei einem Fahrzeug, die Vorrichtung (100) umfasst einen Körper (A), gekoppelt mit dem Fahrzeug und im Wesentlichen im Stillstand verbleibend während die Vorrichtung benutzt wird, und in welchem vorgesehen ist: erster Hebel (10) vom Innern dieses Körpers (A) heraustretend, und unabhängig zu diesem bewegbar, ein zweiter Hebel (20) und ein dritter Hebel (30), und ein Rahmen (1), **dadurch gekennzeichnet, dass** dieser erste Hebel einen oberen Handgriff (2) hat und auf dem Rahmen in einer im Wesentlichen zentralen Position (11) schwenkbar gelagert ist, sodass, falls ein Benutzer eine Aktivität auf diesen Handgriff (2) ausübt, dieser vorwärts und rückwärts verschoben werden kann, der zweite Hebel (20) ist schwenkbar auf dem Rahmen (1) gelagert, korrespondierend zu einem seiner Enden (22), der obere Teil (13) des ersten Hebels (10) ist derart geformt, um mit dem zweiten Hebel (20) zu interferieren, als ein oberes kinematisches Drehmoment, dieser dritte Hebel (30) ist schwenkbar am Unterbereich des Rahmens (1) gelagert, korrespondierend zu einem seiner Endbereiche (32), ein unteres Ende (12) des ersten Hebels (10) ist so geformt, dass es mit diesem Hebel interferiert, als ein oberes kinematisches Drehmoment, ein freies Ende (21) des zweiten Hebels ist mit einem Bremsbetätigungsmittel (6) gekoppelt und ein freies Ende (31) des dritten Hebels (30) ist mit einem Beschleunigungsbetätigungsmittel (5) gekoppelt.

2. Vorrichtung nach Anspruch 1, **dadurch gekennzeichnet, dass** der zweite Hebel und der dritte Hebel mit elastischen Rückstellmitteln (23, 33) versehen sind, um sie in eine Ruhe- oder neutrale Position zu bringen.

3. Vorrichtung nach Anspruch 2, **dadurch gekennzeichnet, dass** diese elastische Mittel (23, 33) aus einer Feder bestehen.

4. Vorrichtung nach einem der vorstehenden Ansprüche, **dadurch gekennzeichnet, dass** diese mit Klammer (3) zur Befestigung am Fahrzeug versehen ist, insbesondere einer Klammer (7) die in im Sitzrahmen realisierte Löcher (4) eingefügt werden kann.

5. Vorrichtung nach einem der vorstehenden Ansprüche, **dadurch gekennzeichnet, dass** dieser Rahmen (1) zwei spiegelähnliche Elemente vorsieht, die neben der Hebelanordnung angeordnet sind.

6. Vorrichtung nach einem der vorstehenden Ansprüche, **dadurch gekennzeichnet, dass** eine Beschleunigungswirkung durch rückwärts ziehen dieses ersten Hebels gemacht wird, während eine Bremswirkung durch vorwärts drücken dieses ersten Hebels gemacht wird.

7. Vorrichtung nach einem der vorstehenden Ansprüche, **dadurch gekennzeichnet, dass** dieser Handgriff mit anderen Kontrollmitteln versehen ist, so wie beispielsweise einem Bremsblockierknopf, Hupe, oder Lichtsteuerelemente.

8. Vorrichtung nach einem der vorstehenden Ansprüche 1 bis 3 und 5 bis 7, **dadurch gekennzeichnet, dass** die Vorrichtung horizontal unter einem Lenkrad vorzusehen ist.

## Revendications

1. Dispositif manuel (100) servant à commander le frein et l'accélérateur d'un véhicule, ledit dispositif (100) comprenant un corps (A) couplé au véhicule, qui reste sensiblement fixe pendant que le dispositif est utilisé, et dans lequel sont disposés un premier levier (10) qui émerge de l'intérieur dudit corps (A) et qui peut se déplacer indépendamment par rapport à ce corps, un deuxième levier (20) et un troisième levier (30), et un cadre (1), **caractérisé en ce que** ledit premier levier est muni d'une poignée supérieure (2) et est articulé sur le cadre dans une position sensiblement centrale (11), de sorte que, si l'utilisateur exerce une action sur ladite poignée (2), ce levier peut être déplacé vers l'avant ou vers l'arrière, ledit deuxième levier (20) étant articulé plus haut sur ledit cadre (1) au niveau d'une de ses extrémités (22), la partie supérieure (13) du premier levier (10) étant conformée de manière à avoir une interaction avec ledit deuxième levier (20), comme un couple cinématique supérieur, ledit troisième levier (30) étant articulé à la partie basse dudit cadre (1), au niveau d'une de ses extrémités (32), l'extrémité inférieure (12) dudit premier levier (10) étant conformée de manière à avoir une interaction avec ledit levier, comme un couple cinématique supérieur, l'extrémité libre (21) du deuxième levier étant couplée à des moyens de commande de frein (6) et l'extrémité libre (31) du troisième levier (30) étant couplée à des moyens de commande de l'accélérateur (5).

2. Dispositif selon la revendication 1, **caractérisé en ce que** ledit deuxième levier et ledit troisième levier sont dotés de moyens de rappel élastiques (23, 33) qui visent à les placer dans une position de repos ou position neutre.

3. Dispositif selon la revendication 2, **caractérisé en ce que** lesdits moyens élastiques (23, 33) sont constitués par un ressort.

4. Dispositif selon une des revendications précédentes, **caractérisé en ce qu'**il est équipé d'une attache (3) servant à le fixer au véhicule, en particulier d'une attache (7) qui peut être insérée dans des trous (4) ménagés dans une armature de siège.

5. Dispositif selon une quelconque des revendications précédentes, **caractérisé en ce que** ledit cadre (1) comprend deux éléments symétriques, placés à côté de l'ensemble de leviers.

6. Dispositif selon une des revendications précédentes, **caractérisé en ce que** l'action d'accélération est exécutée en tirant ledit premier levier vers l'arrière, tandis que l'action de freinage est exécutée en poussant ledit premier levier vers l'avant.

7. Dispositif selon une des revendications précédentes, **caractérisé en ce que** ladite poignée est munie d'autres commandes telles que, par exemple, un bouton de blocage du frein, des commandes actionnant un avertisseur ou des feux.

8. Dispositif selon une des revendications précédentes 1 à 3 et 5 à 7, **caractérisé en ce que** ledit dispositif est conçu pour être placé horizontalement sous un volant de direction.
